# EUROPEAN PATENT APPLICATION

(11) **EP 3 076 643 A1**
(43) Date of publication of application: **05.10.2016**
(21) Application number: 14795374.9
(22) Date of filing: 14.05.2014
(51) Int. Cl.: H04M 1/725

(54) **FALL-PROOF METHOD AND FALL-PROOF DEVICE FOR MOBILE TERMINAL**

(30) Priority: 29.11.2013 CN 201310632040
(71) Applicant: ZTE Corporation, Shenzhen, Guangdong 518057 (CN)
(72) Inventor: WANG, Liang, Shenzhen Guangdong 518057 (CN)
(74) Representative: Novagraaf Technologies
(86) International application number: PCT/CN2014/077487
(87) International publication number: WO 2014/180361

(57) **Abstract**

The disclosure discloses an impact-resisting method and device for a mobile terminal. The method includes that: it is detected whether a mobile terminal is in a damaging falling state; when the mobile terminal is in the damaging falling state, an included angle α between a vertical line based on a preset point on a preset end surface of the mobile terminal and the preset end surface is detected, or an included angle α between the vertical line based on the preset point on the mobile terminal and a plane where the preset end surface is located is detected; according to the detected included angle α and a preset impact-resisting included angle β, it is analyzed whether posture adjustment needs to be performed on the mobile terminal; and when the posture adjustment needs to be performed on the mobile terminal, according to a difference between the detected included angle α and the preset impact-resisting included angle β, a kinetic energy component is controlled to adjust a falling posture of the mobile terminal. By adopting embodiments of the disclosure, the impact to a vulnerable portion can be avoided by adjusting the falling posture of the mobile terminal, thereby improving the impact-resisting performance of the mobile terminal.

## Description

### Technical Field

The disclosure relates to the field of mobile terminal, and in particular to an impact-resisting method and device for a mobile terminal.

### Background

At present, with the development of electronic communication technology, at least one functions of a mobile terminal become more and more powerful, which greatly changes people's life; the mobile terminal has become an indispensable important tool for people, and the mobile terminals applying a variety of new technologies emerge as required, for example, a smart phone, a tablet computer, etc. For meeting the demands of consumers, manufactures and developers give an increasing emphasis on a visual impact brought by a human-computer interface, for example, a mobile phone screen is made bigger, a touch screen and a display screen are bonded tighter, a bezel becomes narrower (a proportion of a screen is higher and higher), a battery capacity is bigger and bigger and so on. With the improvement of these performances of the mobile terminal, the mobile terminal becomes more and more vulnerable under impact while a price of the mobile terminal becomes higher and higher, so an impact-resisting performance of the mobile terminal becomes more and more important.

A current impact-resisting design for the mobile terminal is that: by adding a cushioning device to the mobile terminal, namely adding a coating to the mobile terminal, wherein a material of the cushioning device may be silicone or rubber. When the mobile terminal falls to the ground, the cushioning device contacts the ground instead of making an outer shell and a liquid screen of the mobile terminal contact the ground. However, by using this way, the mobile terminal becomes bloated, which cannot meet users' demands in a current trend of lightening and thinning the mobile terminal for carrying easily; besides, for the cushioning device coating added to the mobile terminal, when the user takes the cushioning device coating down, the mobile terminal loses an impact-resisting function. Then, if the mobile terminal falls to the ground, it is easily damaged, which cannot achieve an impact-resisting effect.

### Summary

According to one embodiment of the disclosure, an impact-resisting method and device for a mobile terminal is provided, which can avoid the impact to a vulnerable portion by adjusting a falling posture of the mobile terminal without changing an appearance of the mobile terminal, thereby improving a impact-resisting performance of the mobile terminal.

An impact-resisting method for a mobile terminal is provided, which includes that:
detecting whether the mobile terminal is in a damaging falling state; when the mobile terminal is in the damaging falling state, detecting an included angle α between a vertical line based on a preset point on a preset end surface of the mobile terminal and the preset end surface, or detecting an included angle α between a vertical line based on a preset point on the mobile terminal and a plane where a preset end surface is located; analyzing, according to the detected included angle α and a preset impact-resisting included angle β, whether posture adjustment needs to be performed on the mobile terminal; and when the posture adjustment needs to be performed on the mobile terminal, according to a difference between the detected included angle α and the preset impact-resisting included angle β, controlling a kinetic energy component to adjust a falling posture of the mobile terminal.

In an example embodiment, according to the detected included angle α and the preset impact-resisting included angle β, analyzing whether the posture adjustment needs to be performed on the mobile terminal includes: judging whether the difference between the detected included angle α and the preset impact-resisting included angle β is less than or equal to a preset value; and when the difference between the detected included angle α and the preset impact-resisting included angle β is greater than the preset value, determining that the posture adjustment needs to be performed on the mobile terminal.

In an example embodiment, according to the difference between the detected included angle α and the preset impact-resisting included angle β, controlling the kinetic energy component to adjust the falling posture of the mobile terminal includes: A, controlling the kinetic energy component to adjust the falling posture of the mobile terminal according to a preset adjustment range, so as to adjust the included angle α of the mobile terminal towards the preset impact-resisting included angle β; B, detecting the included angle α after the posture adjustment, and judging whether the difference between the adjusted included angle α and the preset impact-resisting included angle β is less than or equal to the preset value; and C, when the difference between the adjusted included angle α and the preset impact-resisting included angle β is greater than the preset value, repeating the above Step A and Step B until the difference between the adjusted included angle α and the preset impact-resisting included angle β is less than or equal to the preset value.

In an example embodiment, detecting whether the mobile terminal is in the damaging falling state includes: detecting a speed value of the mobile terminal in a preset direction; judging whether the speed value of the mobile terminal in the preset direction is greater than a preset speed threshold; when the speed value of the mobile terminal in the preset direction is greater than the preset speed threshold, determining that the mobile terminal is in the damaging falling state.

In an example embodiment, according to the difference between the detected included angle α and the preset impact-resisting included angle β, controlling the kinetic energy component to adjust the falling posture of the mobile terminal includes: according to the difference between the detected included angle α and the preset impact-resisting included angle β, calculating a voltage, a current and enabling time needed for adjustment; and controlling the kinetic energy component to start and run according to the calculated voltage, current and enabling time, to adjust the falling posture of the mobile terminal.

An impact-resisting device for a mobile terminal, which is applied to the mobile terminal, is also provided, wherein the device includes:
a first detecting component, which is configured to detect whether a mobile terminal is in a damaging falling state; a second detecting component, which is configured to, when the mobile terminal is in the damaging falling state, detect an included angle α between a vertical line based on a preset point on a preset end surface of the mobile terminal and the preset end surface, or detect an included angle α between a vertical line based on a preset point on the mobile terminal and a plane where a preset end surface is located; an analyzing component, which is configured to analyze, according to the detected included angle α and a preset impact-resisting included angle β, whether posture adjustment needs to be performed on the mobile terminal; and a controlling component, which is configured to, when the posture adjustment needs to be performed on the mobile terminal, control a kinetic energy component (50) to adjust a falling posture of the mobile terminal according to a difference between the detected included angle α and the preset impact-resisting included angle β.

In an example embodiment, the analyzing component includes: a first judging element, which is configured to judge whether the difference between the detected included angle α and the preset impact-resisting included angle β is less than or equal to a preset value; and a first determining element, which is configured to, when the difference between the detected included angle α and the preset impact-resisting included angle β is greater than the preset value, determine that the posture adjustment needs to be performed on the mobile terminal.

In an example embodiment, the controlling component includes: a first controlling element, which is configured to control the kinetic energy component to adjust the falling posture of the mobile terminal according to a preset adjustment range, so as to adjust the included angle α of the mobile terminal towards the preset impact-resisting included angle β; a detecting element, which is configured to detect the included angle α after the posture adjustment, and judge whether a difference between the adjusted included angle α and the preset impact-resisting included angle β is less than or equal to the preset value; the first controlling element is further configured to, when a detection result of the detecting element is that the difference between the adjusted included angle α and the preset impact-resisting included angle β is greater than the preset value, continue controlling the kinetic energy component to adjust the falling posture of the mobile terminal according to the preset adjustment range, until the difference between the adjusted included angle α and the preset impact-resisting included angle β is less than or equal to the preset value.

In an example embodiment, the first detecting component includes: a speed sensor, which is configured to detect a speed value of the mobile terminal in a preset direction; a second judging element, which is configured to judge whether the speed value of the mobile terminal in the preset direction is greater than a preset speed threshold; and a second determining element, which is configured to, when the speed value of the mobile terminal in the preset direction is greater than the preset speed threshold, determine that the mobile terminal is in the damaging falling state.

In an example embodiment, the controlling component includes: a calculating element, which is configured to calculate a voltage, a current and enabling time needed for adjustment according to the difference between the first included angle α and the preset impact-resisting included angle β; and a second controlling element, which is configured to control the kinetic energy component to start and run according to the calculated voltage, current and enabling time, to adjust the falling posture of the mobile terminal.

By adopting embodiments of the disclosure, when the mobile terminal is in the damaging falling state, it is analyzed whether the posture adjustment needs to be performed on the mobile terminal; when the posture adjustment needs to be performed on the mobile terminal, according to the difference between the detected included angle α and the preset fall-proof included angle β, the kinetic energy component is controlled to adjust the falling posture of the mobile terminal. The embodiments of the disclosure avoid the impact to the vulnerable portion by adjusting the falling posture of the mobile terminal, thereby improving the impact-resisting performance of the mobile terminal.

### Brief Description of Drawings

Fig. 1 shows a flow schematic diagram of an impact-resisting method for a mobile terminal according to a first embodiment of the disclosure;
Fig. 2 shows a flow schematic diagram of step S10 as shown in Fig. 1;
Fig. 3 shows a side view of the mobile terminal in a falling process in an impact-resisting method for a mobile terminal according to the first embodiment of the disclosure;
Fig. 4 shows a flow schematic diagram of a first embodiment of step S40 as shown in Fig. 1;
Fig. 5 shows a flow schematic diagram of a second embodiment of step S40 as shown in Fig. 1;
Fig. 6 shows a flow schematic diagram of an impact-resisting method for a mobile terminal according to a second embodiment of the disclosure;
Fig. 7 shows a structural diagram of an impact-resisting device for a mobile terminal according to a first embodiment of the disclosure;
Fig. 8 shows a structural diagram of a first detecting component as shown in Fig. 7;
Fig. 9 shows a structural diagram of a first embodiment of a controlling component 40 as shown in Fig. 7;
Fig. 10 shows a structural diagram of a second embodiment of a controlling component 40 as shown in Fig. 7; and
Fig. 11 shows a structural diagram of an impact-resisting device for a mobile terminal according to a second embodiment of the disclosure.

The realization of the aim, the function features and the advantages of the disclosure are further illustrated in combination with the accompanying drawings and embodiments.

### Detailed Description

It should be understood that specific embodiments described here are only used for illustrating the disclosure and not intended to limit the disclosure.

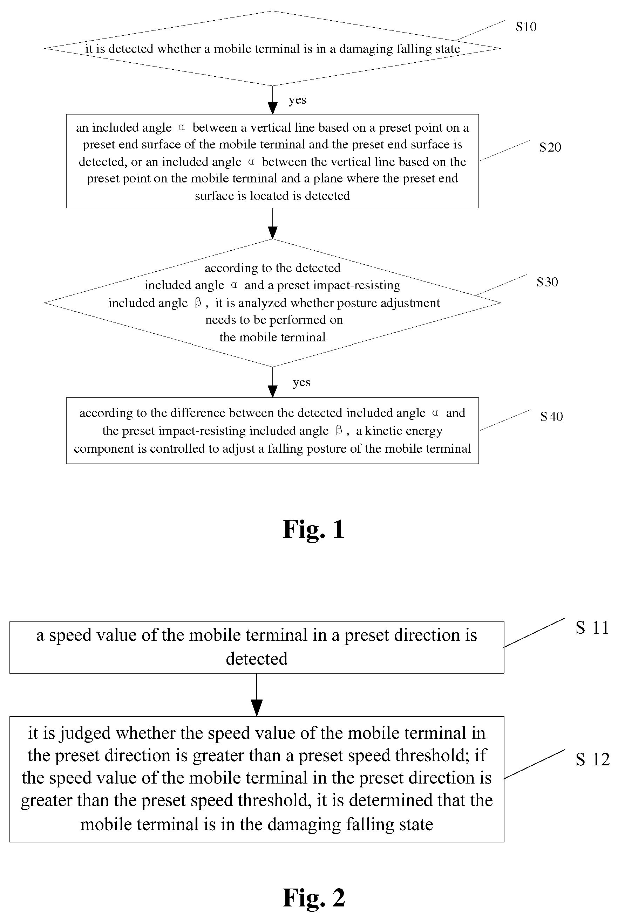

Refer to Fig. 1, Fig. 1 shows a flowchart of an impact-resisting method for a mobile terminal according to a first embodiment of the disclosure and the method includes the following steps.

Step S10: it is detected whether a mobile terminal is in a damaging falling state; when the mobile terminal is in the damaging falling state, then step S20 is performed.

The mobile terminal includes a smart phone, a tablet computer, and so on.

In step S10, it is detected whether the mobile terminal is in the damaging falling state; when the mobile terminal is in the damaging falling state, a falling posture of the mobile terminal needs to be adjusted; when the mobile terminal is not in the damaging falling state, the falling posture of the mobile terminal does not need to be adjusted.

Specifically, S10 includes the following steps (as shown in Fig. 2).

Step S 11: a speed value of the mobile terminal in a preset direction is detected, wherein the preset direction is a vertical direction.

In step S11, the speed value of the mobile terminal in the vertical direction is detected. A speed sensor may be used to detect the speed value of the mobile terminal in the vertical direction. In a falling process of the mobile terminal, there is a speed value in the vertical direction, whether the mobile terminal falls vertically or along a parabolic trajectory.

Step S12: it is judged whether the speed value of the mobile terminal in the preset direction is greater than a preset speed threshold; when the speed value of the mobile terminal in the preset direction is greater than the preset speed threshold, it is determined that the mobile terminal is in the damaging falling state.

The preset speed threshold can be preset. The setting of the preset speed threshold is determined based on impact resisting abilities of different mobile terminals. Specifically, a fall-down test is performed on the mobile terminal in advance to find the minimum speed value in the vertical direction when the mobile terminal falls to the ground with various postures to be damaged, and the minimum speed value is taken as the preset speed threshold. Therefore, in a actual use process, when the speed value of the mobile terminal in the vertical direction exceeds the preset speed threshold, the mobile terminal is considered to be in the damaging falling state.

Step S20: an included angle α between a vertical line based on a preset point on a preset end surface of the mobile terminal and the preset end surface is detected, or an included angle α between the vertical line based on the preset point on the mobile terminal and a plane where the preset end surface is located is detected.

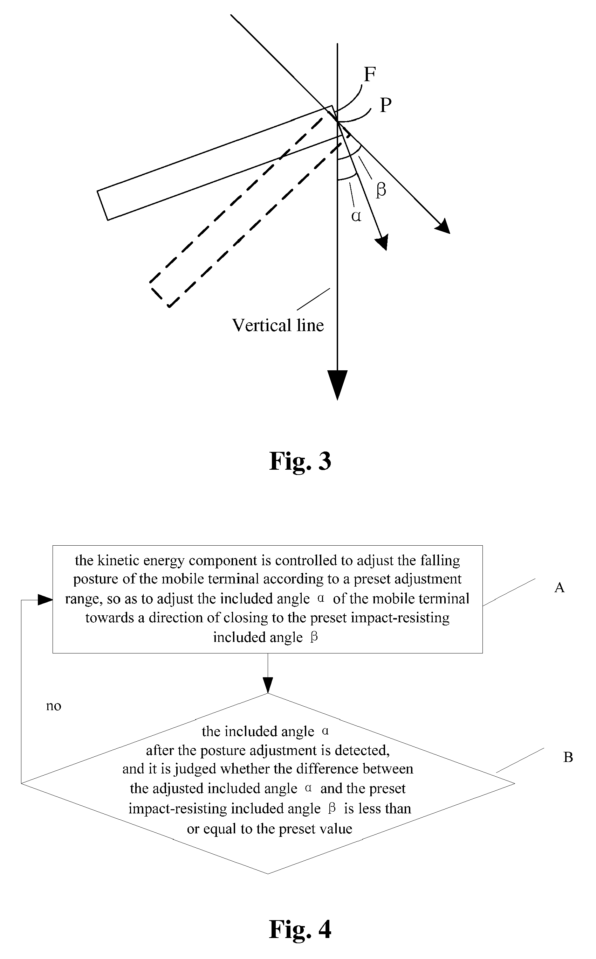

In step S20, the included angle α between the vertical line based on the preset point on the preset end surface of the mobile terminal and the preset end surface may be detected; the preset end surface of the mobile terminal may be a upper end surface, a lower bottom surface, a left side, a right side, a front side or a back side; the preset point may be either a geometric centre on the preset end surface or any point on the preset end surface. Fig. 3 shows a side view (a side directly facing us is the left side of the mobile terminal) of the mobile terminal in the falling process, the preset end surface is the upper end surface F of the mobile terminal, and the preset point is the geometric centre P on the upper end surface F.

In step S20, the included angle α between the vertical line based on the preset point on the mobile terminal and the plane where the preset end surface is located also may be detected; the preset point may be on any end surface of the mobile terminal; for example, the preset point may be on the upper end surface, the lower bottom surface, the left side, the right side, the front side or the back side.

Step S30: according to the detected included angle α and a preset impact-resisting included angle β, it is analyzed whether posture adjustment needs to be performed on the mobile terminal; when the posture adjustment needs to be performed on the mobile terminal, step S40 is performed.

The preset impact-resisting included angle β may be preset. Specifically, the fall-down test is performed on the mobile terminal in advance to find a falling posture which makes the mobile terminal furthest resist impact, and an included angle between the vertical line based on the preset point and the preset end surface is recorded as the preset impact-resisting included angle β.

In step S30, according to the detected included angle α and the preset impact-resisting included angle β, it is analyzed whether the posture adjustment needs to be performed on the mobile terminal; specifically, the step S30 includes that: it is judged whether the difference between the detected included angle α and the preset impact-resisting included angle β is less than or equal to a preset value; if the difference between the detected included angle α and the preset impact-resisting included angle β is greater than the preset value, it is determined that the posture adjustment needs to be performed on the mobile terminal.

The preset value may be set according to actual needs, for example, it may be set as 2°. When the difference between the detected included angle α and the preset impact-resisting included angle β is less than or equal to the preset value, for example, the difference between the detected included angle α and the preset impact-resisting included angle β is less than or equal to 2° (including that the difference of the included angle α minus the preset impact-resisting included angle β is less than or equal to 2°, also including that the difference between the preset impact-resisting included angle β and the included angle α is less than or equal to 2°), the posture adjustment does not need to be performed on the mobile terminal. When the difference between the detected included angle α and the preset impact-resisting included angle β is greater than the preset value, for example, the difference between the detected included angle α and the preset impact-resisting included angle β is greater than 2°, the posture adjustment needs to be performed on the mobile terminal.

Step S40: according to the difference between the detected included angle α and the preset impact-resisting included angle β, the kinetic energy component is controlled to adjust the falling posture of the mobile terminal.

The kinetic energy component includes a motor with a pendulum clock, a gyroscope or a piston, and so on. In step S40, according to the difference between the detected included angle α and the preset impact-resisting included angle β, the kinetic energy component is controlled to adjust the falling posture of the mobile terminal. The kinetic energy component converts electrical energy to kinetic energy, so as to drive the whole mobile terminal to rotate, thereby adjusting the falling posture of the mobile terminal.

Because the falling of the mobile terminal is a dynamic process, step S10 to step S40 may be performed repeatedly according to a preset time interval to adjust the falling posture of the mobile terminal, so as to adjust the impact to the strongest portion, thereby protecting the vulnerable portion and improving the impact resisting performance of the mobile terminal.

By adopting the embodiments of the disclosure, when the mobile terminal is in the damaging falling state, according to the difference between the detected included angle α and the preset impact-resisting included angle β, the kinetic energy component is controlled to adjust the falling posture of the mobile terminal. The embodiments of the disclosure avoid the impact to the vulnerable portion by adjusting the falling posture of the mobile terminal, thereby improving the impact-resisting performance of the mobile terminal.

Refer to Fig. 4, Fig. 4 shows a flow schematic diagram of a first embodiment of step S40 as shown in Fig. 1; step S40 includes the following steps.

A: the kinetic energy component is controlled to adjust the falling posture of the mobile terminal according to a preset adjustment range, so as to adjust the included angle α of the mobile terminal towards the preset impact-resisting included angle β.

The kinetic energy component is controlled to adjust the falling posture of the mobile terminal according to the preset adjustment range; if the preset adjustment range is 3°, in this step, the kinetic energy component is controlled according to the adjustment range of changing a angle of the mobile terminal by 3° for each time, a voltage, a current and enabling time of the kinetic energy component are set, and the falling posture of the mobile terminal is adjusted through the kinetic energy component.

B: the included angle α after the posture adjustment is detected, and it is judged whether the difference between the adjusted included angle α and the preset impact-resisting included angle β is less than or equal to the preset value; if the difference between the adjusted included angle α and the preset impact-resisting included angle β is greater than the preset value, return to Step A, until the difference between the adjusted included angle α and the preset impact-resisting included angle β is less than or equal to the preset value.

In this step, it is judged whether the difference between the adjusted included angle α in Step A and the preset impact-resisting included angle β is less than or equal to the preset value, so as to determine whether it is needed to continue to perform Step A to adjust circularly to make the mobile terminal fall with the best falling posture finally.

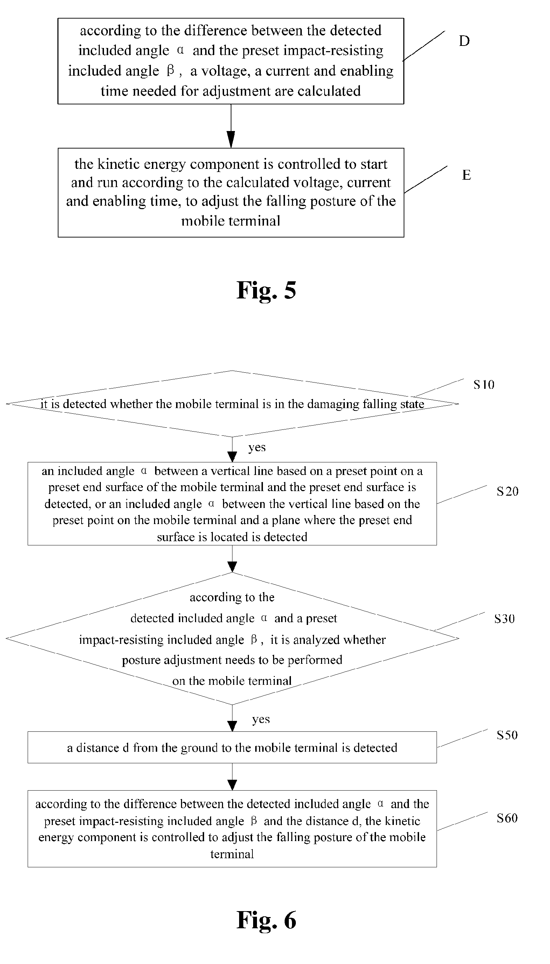

Refer to Fig. 5, Fig. 5 shows a flow schematic diagram of a second embodiment of step S40 as shown in Fig. 1; step S40 includes the following steps.

D: according to the difference between the detected included angle α and the preset impact-resisting included angle β, a voltage, a current and enabling time needed for adjustment are calculated.

In this step, according to the difference between the detected included angle α and the preset impact-resisting included angle β, the voltage, the current and the enabling time needed for adjustment are calculated. Specifically, a location of the kinetic energy component in the mobile terminal may also be considered, that is, according to the location of the kinetic energy component in the mobile terminal and the difference between the detected included angle α and the preset impact-resisting included angle β, the voltage, the current and the enabling time needed for adjustment are calculated.

E: the kinetic energy component is controlled to start and run according to the calculated voltage, current and enabling time, to adjust the falling posture of the mobile terminal.

The kinetic energy component converts the electrical energy to the kinetic energy, so as to drive the whole mobile terminal to rotate, thereby adjusting the falling posture of the mobile terminal.

Refer to Fig. 6, Fig. 6 shows a flow schematic diagram of an impact-resisting method for a mobile terminal according to a second embodiment of the disclosure.

Based on the first embodiment of the impact-resisting method for the mobile terminal, after an analysis result of step S30 is that the posture adjustment needs to be performed on the mobile terminal, the method further includes the following steps:
S50: a distance d from the ground to the mobile terminal is detected.

In this step, the distance d from the ground to the mobile terminal is detected by a distance sensor. The distance sensor may be set at the geometric centre of the mobile terminal.

S60: according to the difference between the detected included angle α and the preset impact-resisting included angle β and the distance d, the kinetic energy component is controlled to adjust the falling posture of the mobile terminal.

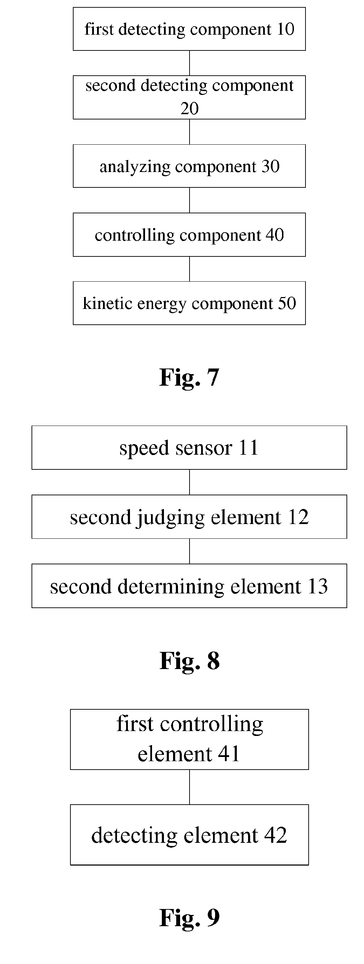

The kinetic energy component includes the motor with a pendulum clock, the gyroscope or the piston, and so on. In step S60, according to the difference between the detected included angle α and the preset impact-resisting included angle β and the distance d, the kinetic energy component is controlled to adjust the falling posture of the mobile terminal. The kinetic energy component converts electrical energy to kinetic energy, so as to drive the whole mobile terminal to rotate, thereby adjusting the falling posture of the mobile terminal. Refer to Fig. 7, Fig. 7 shows a structural diagram of an impact-resisting device for a mobile terminal according to a first embodiment of the disclosure; the device is applied to the mobile terminal, and includes a first detecting component 10, a second detecting component 20 connected with the first detecting component 10, an analyzing component 30 connected with the second detecting component 20, a controlling component 40 connected with the analyzing component 30, and the kinetic energy component 50 connected with the controlling component 40, wherein the first detecting component 10 is configured to detect whether the mobile terminal is in a damaging falling state;
the second detecting component 20 is configured to, when the mobile terminal is in the damaging falling state, detect an included angle α between a vertical line based on a preset point on a preset end surface of the mobile terminal and the preset end surface, or detect the included angle α between the vertical line based on the preset point on the mobile terminal and the plane where the preset end surface is located;
the analyzing component 30 is configured to analyze whether posture adjustment needs to be performed on the mobile terminal according to the detected included angle α and a preset impact-resisting included angle β; and
the controlling component 40 is configured to, when the posture adjustment needs to be performed on the mobile terminal, control the kinetic energy component to adjust the falling posture of the mobile terminal according to the difference between the detected included angle α and the preset impact-resisting included angle β.

The mobile terminal includes a smart phone, a tablet computer, and so on.

The first detecting component 10 is configured to detect whether the mobile terminal is in the damaging falling state; when the mobile terminal is in the damaging falling state, the falling posture of the mobile terminal needs to be adjusted; when the mobile terminal is not in the damaging falling state, the falling posture of the mobile terminal does not need to be adjusted.

Specifically, the first detecting component 10 includes (as shown in Fig. 8):
a speed sensor 11, which is configured to detect a speed value of the mobile terminal in the preset direction, wherein the preset direction is a vertical direction;
a second judging element 12, which is configured to judge whether the speed value of the mobile terminal in the preset direction is greater than a preset speed threshold; and
a second determining element 13, which is configured to, when the speed value of the mobile terminal in the preset direction is greater than the preset speed threshold, determine that the mobile terminal is in the damaging falling state.

The speed sensor 11 detects the speed value of the mobile terminal in the vertical direction. In the falling process of the mobile terminal, there is a speed value in the vertical direction, whether the mobile terminal falls vertically or along a parabolic trajectory.

The preset speed threshold may be preset. The setting of the preset speed threshold is determined based on the impact-resisting abilities of different mobile terminals. Specifically, a fall-down test is performed on the mobile terminal in advance to find the minimum speed value in the vertical direction when the mobile terminal falls to the ground with various postures to be damaged, and the minimum speed value is taken as the preset speed threshold. The second judging element 12 judges whether the speed value of the mobile terminal in the preset direction is greater than the preset speed threshold; the second determining element 13 determines whether the mobile terminal is in the damaging falling state according to a judgement result of the second judging element 12; when the speed value of the mobile terminal in the vertical direction exceeds the preset speed threshold, the mobile terminal is considered to be in the damaging falling state; when the speed value of the mobile terminal in the vertical direction does not exceed the preset speed threshold, the mobile terminal is not considered to be in the damaging falling state.

The second detecting component 20 can detect the included angle α between the vertical line based on the preset point on the preset end surface of the mobile terminal and the preset end surface; the preset end surface of the mobile terminal may be a upper end surface, a lower bottom surface, a left side, a right side, a front side or a back side; the preset point may be either the geometric centre on the preset end surface or any point on the preset end surface. Fig. 3 shows a side view (a side directly facing us is the left side of the mobile terminal) of the mobile terminal in the falling process, the preset end surface is the upper end surface F of the mobile terminal, and the preset point is the geometric centre P on the upper end surface F.

The second detecting component 20 may also detect the included angle α between the vertical line based on the preset point on the mobile terminal and the plane where the preset end surface is located; the preset point can be on any end surface of the mobile terminal; for example, the preset point may be on the upper end surface, the lower bottom surface, the left side, the right side, the front side or the back side.

The preset impact-resisting included angle β may be preset. Specifically, the fall-down test is performed on the mobile terminal in advance to find a falling posture which makes the mobile terminal furthest resist impact, and the included angle between the vertical line based on the preset point and the preset end surface is recorded as the preset impact-resisting included angle β.

The analyzing component 30 analyzes whether the posture adjustment needs to be performed on the mobile terminal according to the detected included angle α and the preset impact-resisting included angle β; specifically, the analyzing component 30 includes a first judging element and a first determining element. The first judging element is configured to detect whether the difference between the detected included angle α and the preset impact-resisting included angle β is less than or equal to a preset value; the first determining element is configured to, when the difference between the detected included angle α and the preset impact-resisting included angle β is greater than the preset value, determine that the posture adjustment needs to be performed on the mobile terminal. The preset value may be set according to actual needs, for example, it may be set as 2°. When the difference between the detected included angle α and the preset impact-resisting included angle β is less than or equal to the preset value, for example, the difference between the detected included angle α and the preset impact-resisting included angle β is less than or equal to 2° (including that the difference of the included angle α minus the preset impact-resisting included angle β is less than or equal to 2°, also including that the difference between the preset impact-resisting included angle β and the included angle α is less than or equal to 2°), the posture adjustment does not need to be performed on the mobile terminal. When the difference between the detected included angle α and the preset impact-resisting included angle β is greater than the preset value, for example, the difference between the detected included angle α and the preset impact-resisting included angle β is greater than 2°, the posture adjustment needs to be performed on the mobile terminal.

The kinetic energy component 50 includes the motor with a pendulum clock, the gyroscope or the piston, and so on. The controlling component 40 controls the kinetic energy component 50 to adjust the falling posture of the mobile terminal according to the difference between the detected included angle α and the preset impact-resisting included angle β. The kinetic energy component 50 converts the electrical energy to the kinetic energy, so as to drive the whole mobile terminal to rotate, thereby adjusting the falling posture of the mobile terminal.

Because the falling of the mobile terminal is a dynamic process, the falling posture of the mobile terminal may be adjusted repeatedly by the first detecting component, the second detecting component, the analyzing component, the controlling component and the kinetic energy component according to a preset time interval, so as to adjust the impact to the strongest portion, thereby protecting the vulnerable portion and improving the impact-resisting performance of the mobile terminal.

Refer to Fig. 9, Fig. 9 shows a structural diagram of a first embodiment of the controlling component 40 in Fig. 7; the controlling component 40 includes a first controlling element 41 and a detecting element 42, wherein,
the first controlling element 41 is configured to control the kinetic energy component to adjust the falling posture of the mobile terminal according to a preset adjustment range, so as to adjust the included angle α of the mobile terminal towards the preset impact-resisting included angle β;
the detecting element 42 is configured to detect the included angle α after the posture adjustment, and judge whether the difference between the adjusted included angle α and the preset impact-resisting included angle β is less than or equal to the preset value.

The first controlling element 41 is further configured to, when the detection result of the detecting element is that the difference between the adjusted included angle α and the preset impact-resisting included angle β is greater than the preset value, continue controlling the kinetic energy component to adjust the falling posture of the mobile terminal according to the preset adjustment range, until the difference between the adjusted included angle α and the preset impact-resisting included angle β is less than or equal to the preset value.

The first controlling element 41 controls the kinetic energy component to adjust the falling posture of the mobile terminal according to the preset adjustment range; if the preset adjustment range is 3°, the first controlling element 41 controls the kinetic energy component according to the adjustment range of changing a angle of the mobile terminal by 3° for each time, sets a voltage, current and enabling time of the kinetic energy component, and adjusts the falling posture of the mobile terminal through the kinetic energy component.

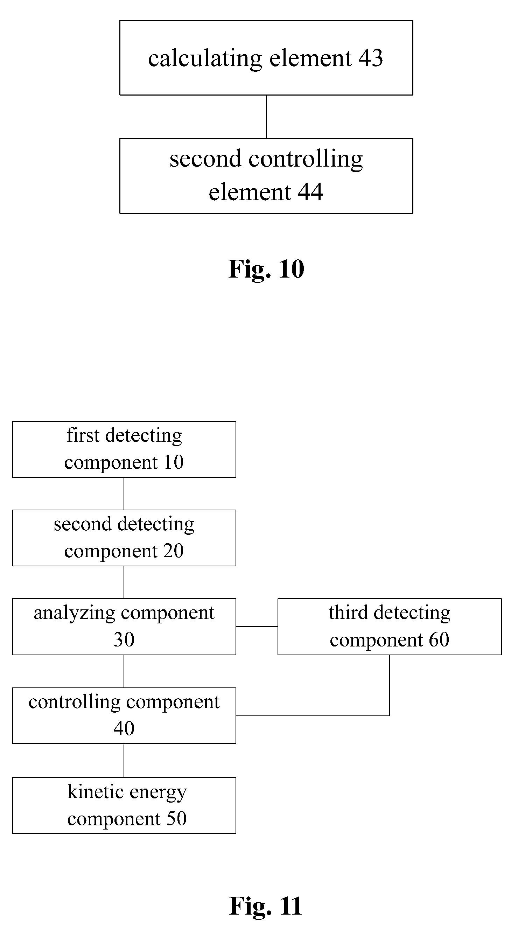

Refer to Fig. 10, Fig. 10 shows a structural diagram of a second embodiment of the controlling component 40 in Fig. 7; the controlling component 40 includes a calculating element 43 and a second controlling element 44, wherein,
the calculating element 43 is configured to calculate the voltage, current and enabling time needed for adjustment according to the difference between the first included angle α and the preset impact-resisting included angle β; and
the second controlling element 44 is configured to control the kinetic energy component to start and run according to the calculated voltage, current and enabling time, to adjust the falling posture of the mobile terminal.

The calculating element 43 calculates the voltage, current and enabling time needed for adjustment according to the difference between the detected included angle α and the preset impact-resisting included angle β. Specifically, the location of the kinetic energy component in the mobile terminal can also be considered, that is, according to the location of the kinetic energy component in the mobile terminal and the difference between the detected included angle α and the preset impact-resisting included angle β, the voltage, the current and the enabling time needed for adjustment are calculated.

The kinetic energy component converts electrical energy to kinetic energy, so as to drive the whole mobile terminal to rotate, thereby adjusting the falling posture of the mobile terminal.

Refer to Fig. 11, Fig. 11 shows a structural diagram of an impact-resisting device for the mobile terminal according to a second embodiment of the disclosure, wherein the device is applied to the mobile terminal.

Based on the first embodiment of the device, the device further includes a third detecting component 60 connected with the analyzing component 30; the third detecting component 60 is connected with the controlling component 40. The third detecting component 60 is configured to, when the analysis result of the analyzing component 30 is that the posture adjustment needs to be performed on the mobile terminal, detect the distance d from the ground to the mobile terminal. The third detecting component 60 may be the distance sensor, and the distance sensor may be set at the geometric centre of the mobile terminal.

The controlling component 40 is further configured to control the kinetic energy component to adjust the falling posture of the mobile terminal according to the difference between the detected included angle α and the preset impact-resisting included angle β and the distance d. The kinetic energy component converts electrical energy to kinetic energy, so as to drive the whole mobile terminal to rotate, thereby adjusting the falling posture of the mobile terminal.

The above is only the example embodiments of the disclosure and not intended to limit a protection scope of the of the disclosure; any equivalent replacements of structure or flow performed based on contents of the specification and accompanying drawings of the disclosure, or direct or indirect application of the equivalent replacements in other related technical fields shall fall within the protection scope of the disclosure.

### Industrial Applicability

As described above, an impact-resisting method and device for a mobile terminal provided by the embodiments of the disclosure have the following beneficial effects: when the mobile terminal is in the damaging falling state, it is analyzed whether the posture adjustment needs to be performed on the mobile terminal; when the posture adjustment needs to be performed on the mobile terminal, according to the difference between the detected included angle α and the preset impact-resisting included angle β, the kinetic energy component is controlled to adjust the falling posture of the mobile terminal. The embodiments of the disclosure avoids the impact to a vulnerable portion by adjusting the falling posture of the mobile terminal, thereby improving the impact-resisting performance of the mobile terminal.

## Claims

1. An impact-resisting method for a mobile terminal, the method comprising:
detecting whether the mobile terminal is in a damaging falling state;
when the mobile terminal is in the damaging falling state, detecting an included angle α between a vertical line based on a preset point on a preset end surface of the mobile terminal and the preset end surface, or detecting an included angle α between a vertical line based on a preset point on the mobile terminal and a plane where a preset end surface is located;
analyzing, according to the detected included angle α and a preset impact-resisting included angle β, whether posture adjustment needs to be performed on the mobile terminal; and
when the posture adjustment needs to be performed on the mobile terminal, according to a difference between the detected included angle α and the preset impact-resisting included angle β, controlling a kinetic energy component to adjust a falling posture of the mobile terminal.

2. The method as claimed in claim 1, wherein according to the detected included angle α and the preset impact-resisting included angle β, analyzing whether the posture adjustment needs to be performed on the mobile terminal comprises:
judging whether the difference between the detected included angle α and the preset impact-resisting included angle β is less than or equal to a preset value; and
when the difference between the detected included angle α and the preset impact-resisting included angle β is greater than the preset value, determining that the posture adjustment needs to be performed on the mobile terminal.

3. The method as claimed in claim 1, wherein according to the difference between the detected included angle α and the preset impact-resisting included angle β, controlling the kinetic energy component to adjust the falling posture of the mobile terminal comprises:
A, controlling the kinetic energy component to adjust the falling posture of the mobile terminal according to a preset adjustment range, so as to adjust the included angle α of the mobile terminal towards the preset impact-resisting included angle β;
B, detecting the included angle α after the posture adjustment, and judging whether the difference between the adjusted included angle α and the preset impact-resisting included angle β is less than or equal to the preset value; and
C, when the difference between the adjusted included angle α and the preset impact-resisting included angle β is greater than the preset value, repeating the above Step A and Step B until the difference between the adjusted included angle α and the preset impact-resisting included angle β is less than or equal to the preset value.

4. The method as claimed in claim 1, wherein detecting whether the mobile terminal is in the damaging falling state comprises:
detecting a speed value of the mobile terminal in a preset direction;
judging whether the speed value of the mobile terminal in the preset direction is greater than a preset speed threshold; when the speed value of the mobile terminal in the preset direction is greater than the preset speed threshold, determining that the mobile terminal is in the damaging falling state.

5. The method as claimed in claim 1, wherein according to the difference between the detected included angle α and the preset impact-resisting included angle β, controlling the kinetic energy component to adjust the falling posture of the mobile terminal comprises:
according to the difference between the detected included angle α and the preset impact-resisting included angle β, calculating a voltage, a current and enabling time needed for adjustment; and
controlling the kinetic energy component to start and run according to the calculated voltage, current and enabling time, to adjust the falling posture of the mobile terminal.

6. An impact-resisting device for a mobile terminal, which is applied to the mobile terminal, comprising:
a first detecting component, which is configured to detect whether a mobile terminal is in a damaging falling state;
a second detecting component, which is configured to, when the mobile terminal is in the damaging falling state, detect an included angle α between a vertical line based on a preset point on a preset end surface of the mobile terminal and the preset end surface, or detect an included angle α between a vertical line based on a preset point on the mobile terminal and a plane where a preset end surface is located;
an analyzing component, which is configured to analyze, according to the detected included angle α and a preset impact-resisting included angle β, whether posture adjustment needs to be performed on the mobile terminal; and
a controlling component, which is configured to, when the posture adjustment needs to be performed on the mobile terminal, control a kinetic energy component to adjust a falling posture of the mobile terminal according to a difference between the detected included angle α and the preset impact-resisting included angle β.

7. The impact-resisting device as claimed in claim 6, wherein the analyzing component comprises:
a first judging element, which is configured to judge whether the difference between the detected included angle α and the preset impact-resisting included angle β is less than or equal to a preset value; and
a first determining element, which is configured to, when the difference between the detected included angle α and the preset impact-resisting included angle β is greater than the preset value, determine that the posture adjustment needs to be performed on the mobile terminal.

8. The impact-resisting device as claimed in claim 6, wherein the controlling component comprises:
a first controlling element, which is configured to control the kinetic energy component to adjust the falling posture of the mobile terminal according to a preset adjustment range, so as to adjust the included angle α of the mobile terminal towards the preset impact-resisting included angle β;
a detecting element, which is configured to detect the included angle α after the posture adjustment, and judge whether a difference between the adjusted included angle α and the preset impact-resisting included angle β is less than or equal to the preset value;
the first controlling element is further configured to, when a detection result of the detecting element is that the difference between the adjusted included angle α and the preset impact-resisting included angle β is greater than the preset value, continue controlling the kinetic energy component to adjust the falling posture of the mobile terminal according to the preset adjustment range, until the difference between the adjusted included angle α and the preset impact-resisting included angle β is less than or equal to the preset value.

9. The impact-resisting device as claimed in claim 6, wherein the first detecting component comprises:
a speed sensor, which is configured to detect a speed value of the mobile terminal in a preset direction;
a second judging element, which is configured to judge whether the speed value of the mobile terminal in the preset direction is greater than a preset speed threshold; and
a second determining element, which is configured to, when the speed value of the mobile terminal in the preset direction is greater than the preset speed threshold, determine that the mobile terminal is in the damaging falling state.

10. The impact-resisting device as claimed in claim 6, wherein the controlling component comprises:
a calculating element, which is configured to calculate a voltage, a current and enabling time needed for adjustment according to the difference between the first included angle α and the preset impact-resisting included angle β; and
a second controlling element, which is configured to control the kinetic energy component to start and run according to the calculated voltage, current and enabling time, to adjust the falling posture of the mobile terminal.
